# EUROPEAN PATENT APPLICATION

(11) **EP 1 843 537 A1**
(43) Date of publication of application: **10.10.2007**
(21) Application number: 06703261.5
(22) Date of filing: 05.01.2006
(51) Int. Cl.: H04L 29/02

(54) **A PROCESS METHOD FOR DEALING WITH DEVICE OVERLOAD IN THE COMMUNICATION NETWORK**

(30) Priority: 19.01.2005 CN 200510001776
(71) Applicant: Huawei Technologies Co., Ltd., Longgang District, Shenzhen Guangdong 518129 (CN)
(72) Inventor: XU, Bo, Shenzhen, Guangdong 518129 (CN); WU, Dengchao, Shenzhen, Guangdong 518129 (CN); CHEN, Yuepeng, Shenzhen, Guangdong 518129 (CN); FAN, Lingyuan, Shenzhen, Guangdong 518129 (CN); LV, Zhenzhu, Shenzhen, Guangdong 518129 (CN)
(74) Representative: Manitz, Finsterwald & Partner GbR
(86) International application number: PCT/CN2006/000006
(87) International publication number: WO 2006/076850

(57) **Abstract**

A method for processing device overload in a communication network includes: a device involved in a service connection checking in real time whether processing capability of the device exceeds an overload threshold set in the device, and sending to a neighboring device of the device an overload alarm message containing an address of the device if the processing capability of the device exceeds the overload threshold; the neighboring device restricting traffic passing through the device after receiving the overload alarm message. The method of the present invention enables the device involved in the service connection to automatically lead the establishment of the subsequent service connection reasonably, which improves the operation efficiency of network and shortens the processing delay of service connection.

## Description

### Field of the Invention

The present invention relates to technologies for a Differentiated Service (Diff-serv) model with a separate bearer layer, and more particularly, to a method for processing device overload in a communication network using the Diff-serv model, especially in an IP telecommunication network.

### Background of the Invention

Along with the development of the Internet, various techniques for assuring Quality of Service (QoS) are proposed. Therefore, the Internet Engineering Task Force (IETF) put forward many service models and mechanisms to meet demands of QoS. At present, what is recognized in the field is to adopt an Integrated Service (Int-Serv) model at the access side and the border of a network and a Differentiated Service (Diff-Serv) model at the core of the network. Though line utilization efficiency is high, the effect of QoS guarantee is unpredictable because only priority level is set as a QoS guarantee in the Diff-Serv model. In order to improve QoS technologies, a separate bearer control layer and a special Diff-Serv QoS signalling mechanism are set up for the Diff-Serv model of a backbone network. The Diff-Serv model is called a Diff-Serv model with a separate bearer control layer.

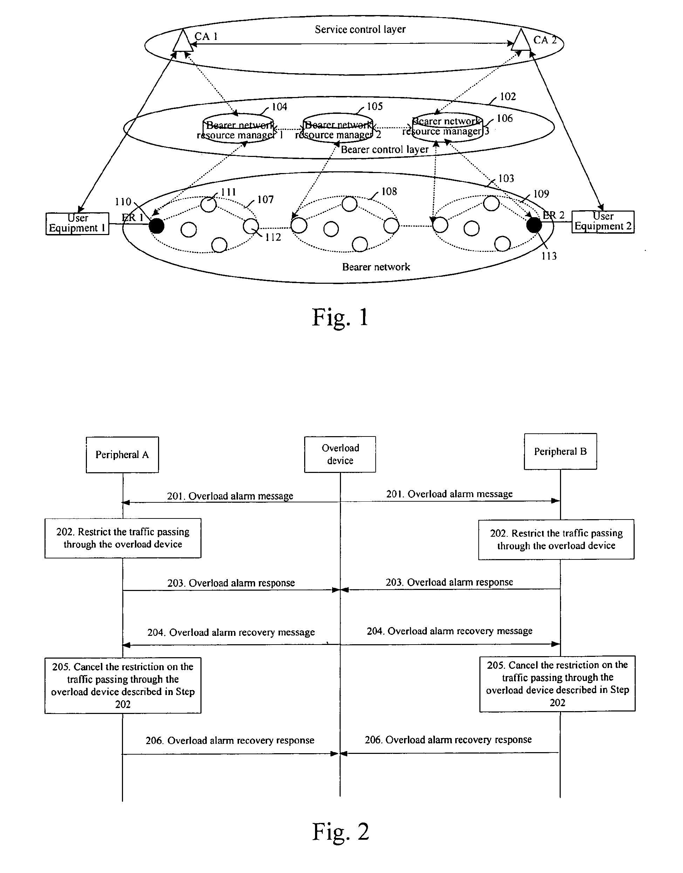

Fig. 1 is a schematic diagram illustrating a structure of a conventional Diff-Serv model with a separate bearer control layer applied in an IP telecommunication network. As shown in Fig. 1, bearer control layer 102 is located between bearer network 103 and service control layer 101. The Call Agent (CA) in service control layer 101 is a service server, such as a softswitch, a Video on Demand (VOD) control server, a Gate Keeper (GK), etc.. The CA receives a call request from User Equipment (UE), and then implements the request and switch of the call as an agent of the UE. Only two CAs are shown in Fig.1, but a call may relate to one or more CAs. In bearer control layer 102, a bearer network resource manager acquires the topology structure and path resource information of core nodes and Label Switched Paths (LSPs) in the bearer network by learning dynamically or configuring statically. The bearer network resource manager calculates the service path resource information and reserves path resources when receiving a resource application from the CA. Although only three bearer network resource managers, e.g., bearer network resource manager 1 (104), bearer network resource manager 2 (105) and bearer network resource manager 3 (106), are shown in Fig.1, the number of the bearer network resource managers is not limited. The service bandwidth application, the service bandwidth application response, and information of a path allocated by each bearer network resource manager for the service bandwidth application are delivered between bearer network resource managers through signaling. In bearer network 103, each bearer network resource manager manages a specific bearer network domain, which is called a management domain of the bearer network resource manager. In Fig. 1, the management domain includes management domain 107 of bearer network resource manager 1, management domain 108 of bearer network resource manager 2, management domain 109 of bearer network resource manager 3. Management domain 107 includes Edge Router (ER) 110, Core Router (CR) 111 and Border Router (BR) 112. The ER may import call traffic of UE to the bearer network or export the call traffic of UE from the bearer network. Management domains 108 and 109 include CRs and BRs, too. The ER, CR and BR all belong to the bearer network and are generally referred to as Connection Node (CN).

In a communication network, especially in an IP telecommunication network, terminal devices involved in a service connection distribute widely and many intermediate devices are concerned in the signaling procedure of the service connection. When a service connection with large-capacity gets on line or gets off line, a certain device may be in the state of full load. Therefore, a corresponding processing mechanism is needed to eliminate an unfavorable effect caused by the device overload. However, there is no overload processing mechanism in the related art. When a device in bearer control layer or bearer layer is overloaded, other devices involved in the service connection may be unable to automatically drain the establishment of subsequent service connection reasonably, which may result in lower operation efficiency of the network and longer processing delay of the service connection.

### Summary of the Invention

The present invention provides a method for processing device overload in a communication network, which enables devices involved in a service connection to automatically lead the establishment of subsequent service connection reasonably, thereby improving the operation efficiency of the network and shortening the processing delay of the service connection.

A method for processing device overload in a communication network, applicable to a communication network with a separate bearer control layer, includes:
checking, by a device involved in a service connection, in real time whether processing capability of the device exceeds an overload threshold set in the device;
sending, by the device, to a neighboring device of the device an overload alarm message containing an address of the device if the processing capability of the device exceeds the overload threshold;
restricting, by the neighboring device, traffic passing through the device after receiving the overload alarm message.

The restricting traffic passing through the device includes:
selecting a route not passing through the device for the service connection.

The selecting a route not passing through the device for the service connection includes one of:
attaching an overload identifier to a route passing through the device, selecting a route without the overload identifier for the service connection; and
raising the priority of a redundancy route of the route passing through the device, or reducing the priority of the route passing through the device.

The restricting traffic passing through the device includes:
restricting the traffic of the service connection passing through the device.

The method further includes:
returning, by the neighboring device, an overload alarm response to the device after restricting the traffic passing through the device;
checking, by the device, whether the processing capability of the device is below the overload threshold in real time after receiving the overload alarm response;
sending, by the device, to the neighboring device an overload alarm recovery message containing an address of the device if the processing capability of the device is below the overload threshold;
canceling, by the neighboring device, the restriction or a part of restriction on the traffic passing through the device after receiving the overload alarm recovery message.

The method further includes:
checking, by the device, whether the processing capability of the device is below the overload threshold in real time;
resending, by the device, to the neighboring device the overload alarm message containing the address of the device within a predetermined period if the processing capability of the device is not below the overload threshold;
keeping on restricting, by the neighboring device, the traffic passing through the device after receiving the overload alarm message;
sending, by the device, to the neighboring device an overload alarm recovery message containing the address of the device if the processing capability of the device is below the overload threshold;
canceling, by the neighboring device, the restriction or a part of restriction on the traffic passing through the device after receiving the overload alarm recovery message.

The method further includes:
determining, by the neighboring device, whether an overload alarm message or an overload alarm recovery message is received from the device within a predetermined period after restricting the traffic passing through the device;
if the neighboring device does not receive the overload alarm message or an overload recovery message, canceling the restriction or a part of restriction on the traffic passing through the device; if the neighboring device receives the overload alarm message, keeping on restricting the traffic passing through the device; if the neighboring device receives the overload alarm recovery message, canceling the restriction or a part of restriction on the traffic passing through the device.

The canceling the restriction on the traffic passing through the device comprises one of:
canceling the overload identifier of the route passing through the device; and
recovering the priority of the redundancy route of the route passing through the device to an original priority of the redundancy route, or recovering the priority of the route passing through the device to an original priority of the route.

The canceling the restriction on the traffic passing through the device includes:
canceling the restriction on the traffic of the service connection passing through the device.

The overload threshold corresponds to at least one overload level, and the overload alarm message contains overload level information;
the restricting traffic passing through the device includes:
restricting the traffic passing through the device according to the overload level information.

The neighboring device of the device is an upstream device of the device.

The overload threshold is determined according to the processing capability of the device.

The processing capability of the device includes at least one of:
running capability of a CPU, occupation condition of a memory and processing capability of a message queue.

The device involved in the service connection is a control device in a bearer control layer of the communication network;
the neighboring device includes at least one of: a control device in the bearer control layer, a connection point in the bearer layer and a call agent in a service control layer.

The device involved in the service connection is a connection node in a bearer layer of the communication network; the neighboring device is a control device in the bearer control layer.

The control device in the bearer control layer of the communication network includes one of a bearer network resource Manager, a bearer strategy manager and a bearer resource or strategy manager.

In accordance with the present invention, the device checks whether it is overloaded in real time during operation; once overload, the device sends an overload alarm message of corresponding overload level to a neighboring device or an upstream device; after receiving the overload alarm message, the neighboring device or the upstream device adjusts its route strategy, selects a route without passing through the overload device for the service connection, and restricts the service connection to use the route passing through the overload device in the route table according to the overload level, so as to control the traffic of the service connection. Therefore, according to the present invention, the running condition of the network may be checked in advance before the service connection is established. Once a certain device is overloaded, during the establishment of the service connection, relevant devices involved in the service connection automatically drain the subsequent service connection to a route without passing through the overload device reasonably, which makes the distribution of QoS signaling traffic in the network more balanced, improves the completion rate of service connection and the operation efficiency of network, and enables the service server, e.g., a CA, to shorten the signaling processing delay for establishing the service connection.

### Brief Description of the Drawings

Fig. 1 is a schematic diagram illustrating a structure of a conventional Diff-Serv model with a separate bearer control layer applied in an IP telecommunication network.
Fig. 2 is a flowchart illustrating a procedure for performing overload management when the upstream and downstream relationship between devices is ambiguous in accordance with an embodiment of the present invention.
Fig. 3 is a flowchart illustrating a procedure for performing overload management when the upstream and downstream relationship between devices is unambiguous in accordance with an embodiment of the present invention.

### Detailed Description of the Invention

The implementation of this invention is hereinafter further described with reference to the accompanying drawings and specific embodiments.

According to the present invention, an overload threshold is set in a device involved in a service connection in a communication network with a separate bearer control layer. The device checks whether its own processing capability is overloaded in real time during operation; if yes, the device sends to its neighboring device an overload alarm message containing an address of the overload device, and the neighboring device restrict the traffic passing through the overload device after receiving the overload alarm message.

In the embodiments of the present invention, the communication network, for example, is an IP telecommunication network, and the solution applied in other communication networks is similar to that applied in the IP telecommunication network.

The processing capability of a device in the present invention includes the running capability of CPU, the occupation condition of memory and the processing capability of message queue, e.g., the number of instructions currently executed by CPU, the number of message queues in memory, the capacity of a memory block for storing the service connection/session control information. Such factors are converted into different percentages as overload thresholds of the processing capability. The overload thresholds may correspond to one or more than one level. For example, if the number of Million Instructions Per Second (MIPS) executed by the CUP of a device is 200, the overload level of the processing capability may be set as Levels 1, 2 and 3, the corresponding overload thresholds are 80%, 90% and 100% of the processing capacity respectively. If the number of MIPS currently executed by the CPU of the device is between 160 and 180, which reaches the overload threshold of Level 1, the current overload level is Level 1; likewise, if the number of MIPS is between 180 and 200, which reaches the overload threshold of Level 2, the current overload level is Level 2; if the number of MIPS is greater than 200, which reaches the overload threshold of Level 3, the overload level is Level 3. For another example, if the memory of a device is able to store 1000 message packages, the overload level of the processing capability may be set as Levels 1, 2 and 3, the corresponding overload threshold are 80%, 90% and 100% of the processing capacity respectively. If the number of message packages in the memory is between 800 and 900, the corresponding overload level is Level 1; likewise, if the number of message packages is between 900 and 1000, the overload level is Level 2 accordingly; if the number of message packages is greater than 1000, the overload level is Level 3.

The above-mentioned overload thresholds corresponding to different overload levels are not limited to the percentages listed above. It should be noted by the skilled in the art that, the percentages set for overload thresholds may be defined according to the reliability of the device, e.g., the overload threshold of each overload level, on the basis of ensuring the reliability of the device is determined according to the corresponding relationship between the processing capability of the device during operation and the error probability or exception probability.

When the processing capability of a device reaches a particular overload level, the device sends an overload alarm message of the overload level to its neighboring device. The content of the overload alarm message may be extended according to specific network application scenarios. In this embodiment, the content of the overload alarm message mainly includes the type and address of the overload device. The address is an IP address or other device identifiers, e.g., a Media Access Control (MAC) address in the Ethernet. The content of the overload alarm message is as shown in Table 1.

**Table 1**

| Type of overloaded device | Address |
|---|---|
| Control device in the bearer control layer | IP address or other device identifiers |
| Network device in the bearer layer , i.e., CN | IP address or other device identifiers |

In Table 1, the type of the device includes a control device in the bearer control layer and a network device in the bearer layer. The control device in the bearer control layer mainly includes at least one of a resource manager, a strategy manager and a resource/strategy manager with the function of the resource manager and the strategy manager in the bearer control layer; the network device in the bearer layer mainly includes a CN.

Corresponding to the overload level, the overload alarm message described in the present invention may be a single-level alarm message containing no overload level information or may be a multi-level alarm message containing the overload level information. The number of overload levels may be defined according to the overload alarm message related to the processing capacity by the skilled in the art. As a specific application in this embodiment, according to the overload thresholds of the overload levels in the above example, the overload levels include three levels which respectively correspond to the overload levels of the processing capability, as shown in Table 2.

**Table 2**

| The overload threshold of overload level | Overload level |
|---|---|
| The overload threshold is 80% of processing capability | Level 1 |
| The overload threshold is 90% of processing capability | Level 2 |
| The overload threshold is 100% of processing capability | Level 3 |

As described in Table 2, the bigger the overload threshold of overload level is, the higher the overload level is. If the current processing capability of a device reaches 80% of the maximum processing capability, the overload alarm message corresponding to Level 1 is sent to the neighboring device; if the current processing capability of a device reaches 90% of the maximum processing capability, the overload alarm message corresponding to Level 2 is sent to the neighboring device; if the current processing capability of a device reaches 100% of the maximum processing capability, the overload alarm message corresponding to Level 3 is sent to the neighboring device.

After receiving the overload alarm message corresponding to a certain overload level, the neighboring device restricts traffic of the corresponding service connection. After receiving an overload alarm message corresponding to the maximum overload level, the neighboring device rejects all new service connections or a part of new service connections; when receiving no overload alarm message, the neighboring device processes all service connections.

In the IP telecommunication network, the establishment of a service connection is generally initiated by the CA. The CM delivers QoS strategy information to an edge node in the bearer network after the computation and allocation of the route and path resources and returns a response to the CA, the CA then notifies the user of starting communication, and the CN in the bearer network starts to forward traffic and control the QoS. If the CA is not adjacent to the home CM of a source node in the service connection, some CMs in the bearer control layer need to perform a agent procedure, i.e., some CMs need to serve as an agent between the CA and the home CM of the source node. In addition, the CN may initiate to the CM a service connection establishment request in some cases. The detailed procedure of the service connection establishment may be referred to China Patents 03156391.0 and 03157145.X, and will not be further described herein.

Since there is an upstream and downstream order in the route path established in a service connection and the transmission path of service information, there exists an upstream and downstream relationship between devices in a service connection or a service information transmission path. Because a route is generally selected from the upstream to the downstream in turn, for devices between which the upstream and downstream relationship may be determined, a device only sends an overload alarm message to its upstream device to improve the efficiency when the processing capability of the device is overloaded. However, in view of different service connection establishment procedures, the upstream and downstream relationship between devices in the IP telecommunication network may not distinctly determined, and the neighboring device of a device may be an upstream device or a downstream device of the device. For example, from the angle of bearer control layer, the CA in the service control layer is an upstream device of the CM in the bearer control layer. In the case that there is no agent operation, the service connection initiated by different CAs may result in that a CM, e.g., CM 1, becomes an upstream device or a downstream device of another CM, e.g., CM 2. In the case that there is an agent operation, the request initiator is an upstream device in the message request direction of the service connection establishment. If the CN actively initiates a service connection establishment request, the CM is a downstream device of the CN; whereas, if the CN receives the service connection establishment request from the CM passively, the CM is an upstream device of the CN. In the IP telecommunication network, there must be an upstream and downstream relationship between devices in a specific service connection or service information transmission path. Considering the service connections with a large number of users, however, it is difficult to determine the upstream and downstream relationship between devices.

Two solutions for solving the above-mentioned cases are proposed by the present invention, i.e., the overload management (i.e. bidirectional overload management) when the upstream and downstream relationship between devices is ambiguous and the overload management when the upstream and downstream relationship between devices is unambiguous.

Fig. 2 is a flowchart illustrating the procedure for performing overload management when the upstream and downstream relationship between devices is ambiguous in accordance with an embodiment of the present invention. In this embodiment, once a device is overloaded, the device sends an overload alarm message to its neighboring device. As shown in Figure 2, the procedure includes the following contents.

Step 201: A device in the bearer control layer and bearer layer check, during operation, whether its own processing capability reaches a specific overload level; if so, the device send an overload alarm message of corresponding overload level to its neighboring device. The overload alarm message contains the type and IP address of the device. In the present invention, it may be supposed that the device is a resource manager and the neighboring device adjacent to the device includes Neighboring device A and Neighboring device B.

In this embodiment, according to the overload levels as shown in Table 2, if the current processing capability of the device reaches 80% of the maximum processing capability of the device, the device sends an overload alarm message corresponding to Level 1 to its neighboring device. The busier the device is, the higher the alarm level is, i.e., if the current processing capability of the device reaches 90% of the maximum processing capability of the device, the device sends an overload alarm corresponding to Level 2 to its neighboring device. If the current processing capability of the device reaches 100% of the maximum processing capability of the device, the device sends an overload alarm corresponding to Level 3 to its neighboring device.

In Step 201, the device in the bearer control layer and the bearer layer includes a CM in the bearer control layer and a CN in the bearer layer. If the CM is overloaded, the CM sends to its adjacent CMs, CAs or CNs an overload alarm message in which the type of the device is CM; If the CN is overloaded, the CN sends to its adjacent CMs an overload alarm message in which the type of the device is CN.

Step 202: The Neighboring device receiving the overload alarm message restricts traffic passing through the overload device according to the content of the overload alarm message.

Particularly, the neighboring device may restrict the routing of a service connection by adjusting a service route strategy or restrict the traffic of the service connection.

The detailed method for restricting the routing of a service connection by adjusting a service route strategy includes: a neighboring device determining whether there is a redundancy route of the route passing through the overload device in the route table of the neighboring device according to the IP address of the overload device, specifically, first determining the destination address of the route passing through the overload device, and determining whether there is a redundancy route which may arrive at the same destination address without passing through the overload device; if so, proceeding to Step 202A; otherwise, proceeding to Step 202B.

Step 202A: The priority of the redundancy route is raised or the priority of the route passing through the overload device is reduced, and thus, the redundancy route will be firstly selected for the service connection, so as to guarantee the QoS of the service connection. Alternatively, an overload identifier is attached to the route passing through the overload device, and thus, the route with the overload identifier will not be selected for the service connection, so as to guarantee the QoS of the service connection.

Step 202B: An overload identifier is attached to the route passing through the overload device, and thus, the route with the overload identifier will not be selected for the service connection, so as to guarantee the QoS of the service connection.

The detailed method for restricting the traffic of the service connection includes: restricting the traffic of the service connection in the route passing through the overload device according to the overload level corresponding to the overload alarm message. The traffic is directed to the data amount of the service connection establishment. If there are multiple overload levels, the traffic of the service connection is restricted according to different overload levels. The higher the overload level is, the more the rejected traffic of the route passing through the overload device is; the lower the overload level is, the less the rejected traffic of the route passing through the overload device is. For example, Levels 1, 2 and 3 described in the above example correspond to 80%, 90% and 100% of the maximum processing capability of the overload device respectively, and the restricted traffic corresponding to the overload levels may also be mapped to 80%, 90% and 100% of traffic; specifically, when receiving an overload alarm message of Level 1, the neighboring device rejects 80% of traffic in the route passing through the overload device; when receiving an overload alarm message of Level 2, the neighboring device rejects 90% of traffic in the route passing through the overload device; likewise, when receiving an overload alarm message of Level 3, the neighboring device rejects 100% of traffic in the route passing through the overload device. In the present invention, the restricted traffic in the route passing through the overload device is not limited to the above-mentioned values, and the skilled in the art may configure the restricted traffic corresponding to different overload levels by themselves as demanded.

Step 203: The neighboring device returns an alarm response to the overload device.

If the processing capability of the overload device is recovered and is less than the overload threshold corresponding to the minimum overload level, i.e., less than 80% of the maximum processing capability, proceed to Step 204.

Step 204: The device sends to its neighboring device an overload alarm recovery message containing the type and IP address of the device to cancel the overload alarm message.

Step 205: After receiving the overload alarm recovery message, the neighboring device of the device cancels the restriction or a part of restriction on the traffic in the route passing through the device described in Step 202.

Particularly, the neighboring device may cancel the restriction on the routing of the service connection by adjusting the service route strategy or cancel the restriction on the traffic of the service connection.

The detailed method for canceling the restriction on the routing of the service connection by adjusting the service route strategy includes:
when there is a redundancy route, recovering the adjusted priority of the redundancy route to the original priority, recovering the priority of the route passing through the overload device to the original priority, or removing the overload identifier of the route passing through the overload device;
when there is no redundancy route, canceling the overload identifier of the route passing through the overload device.

After the restriction on the routing of the service connection is canceled, the procedure of selecting a route for the service connection is similar to the case that the device is not overloaded, i.e. recover to a normal routing mechanism.

Likewise, after the restriction on the traffic of the service connection is canceled, the neighboring devices cease restricting the traffic of the service connection and adopt a normal management mechanism over again.

Step 206: The neighboring device returns an overload alarm recovery response to the overload device to indicate that the neighboring device has removed the restriction on the traffic.

If the upstream and downstream relationship between devices is unambiguous by planning in advance the IP telecommunication network, when a device is overloaded, it only sends an overload alarm message to its upstream device to improve the efficiency. The planning in advance is directed to configure each device in the IP telecommunication network to determine whether to send an overload alarm message in the case of overload; if a device may send the overload alarm message, it is necessary to determine the upstream device of the device.

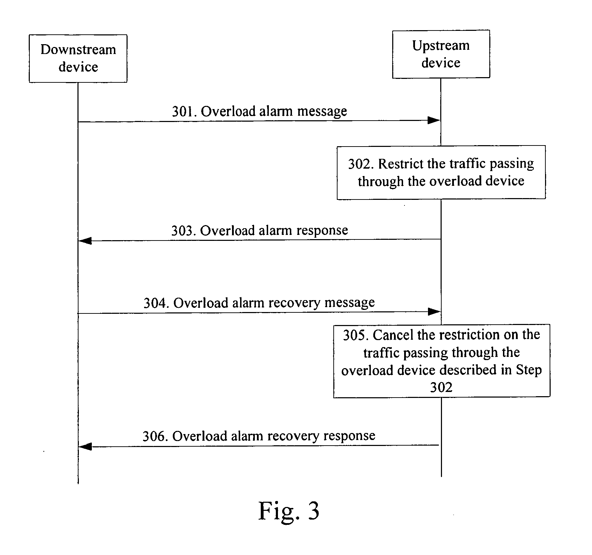

Fig. 3 is a flowchart illustrating the procedure for performing overload management when the upstream and downstream relationship between devices is unambiguous in accordance with an embodiment of the present invention. In the procedure, when a downstream device is overloaded, the downstream device only sends an overload alarm message of corresponding overload level to its adjacent upstream devices. The detailed procedure is as shown in Fig. 3, and Steps 301 to 306 are the same as Steps 201 to 206, and will not be further described herein.

The neighboring device returns an overload alarm response to the overload device after restricting the traffic passing through the overload device in the above embodiment. The overload device checks in real time whether its processing capability is recovered after receiving the overload alarm response, if its processing capability is recovered, the device sends to its neighboring device an overload alarm recovery message containing the address of the device.

In addition, the neighboring device in the present invention may also not return an overload alarm response. The difference between the processing procedure in which an overload alarm response is not returned and the above embodiment is as follows.

When the neighboring device does not return an overload alarm response or the overload alarm response does not arrive at the overload device due to a reason, the overload device checks in real time whether its processing capability is recovered in the case of receiving no overload alarm response. If its processing capability is not recovered, the overload device resends to the neighboring device of the overload device an overload alarm message containing its own address within a predetermined period and the neighboring device goes on restricting the traffic passing through the overload device after receiving the overload alarm message. If its processing capability is recovered, the device sends to the neighboring device of the device an overload alarm recovery message containing its own address and the neighboring device therefore cancels the restriction or a part of restriction on the traffic passing through the overload device after receiving the overload alarm recovery message.

In addition, the neighboring device may also determine whether it has received an overload alarm message or an overload alarm recovery message from the overload device within a predetermined period after restricting the traffic passing through the overload device. If receiving no overload alarm message and overload alarm recovery message, the neighboring device cancels the restriction or a part of restriction on the traffic passing through the overload device. By the above-mentioned dynamical adjust procedure, it may be avoided that the QoS is reduced because the neighboring device goes on restricting the traffic upon receiving no current information of the overload device. If receiving an overload alarm message, the neighboring device goes on restricting the traffic passing through the overload device; if receiving an overload alarm recovery message, the neighboring device cancels the restriction or a part of restriction on the traffic passing through the overload device.

The foregoing is only preferred embodiments of the present invention. The protection scope of the present invention, however, is not limited to the above description. Any change or substitution, within the technical scope disclosed by the present invention, easily occurring to those skilled in the art should be covered by the protection scope of the present invention.

## Claims

1. A method for processing device overload in a communication network, applicable to a communication network with a separate bearer control layer, comprising:
checking, by a device involved in a service connection, in real time whether processing capability of the device exceeds an overload threshold set in the device;
sending, by the device, to a neighboring device of the device an overload alarm message containing an address of the device if the processing capability of the device exceeds the overload threshold;
restricting, by the neighboring device, traffic passing through the device after receiving the overload alarm message.

2. The method of Claim 1, wherein the restricting traffic passing through the device comprises:
selecting a route not passing through the device for the service connection.

3. The method of Claim 2, wherein the selecting a route not passing through the device for the service connection comprises one of:
attaching an overload identifier to a route passing through the device, selecting a route without the overload identifier for the service connection; and
raising the priority of a redundancy route of the route passing through the device, or reducing the priority of the route passing through the device.

4. The method of Claim 1, wherein the restricting traffic passing through the device comprises:
restricting the traffic of the service connection passing through the device.

5. The method of Claim 1, further comprising:
returning, by the neighboring device, an overload alarm response to the device after restricting the traffic passing through the device;
checking, by the device, whether the processing capability of the device is below the overload threshold in real time after receiving the overload alarm response;
sending, by the device, to the neighboring device an overload alarm recovery message containing an address of the device if the processing capability of the device is below the overload threshold;
canceling, by the neighboring device, the restriction or a part of restriction on the traffic passing through the device after receiving the overload alarm recovery message.

6. The method of Claim 1, further comprising:
checking, by the device, whether the processing capability of the device is below the overload threshold in real time;
resending, by the device, to the neighboring device the overload alarm message containing the address of the device within a predetermined period if the processing capability of the device is not below the overload threshold;
keeping on restricting, by the neighboring device, the traffic passing through the device after receiving the overload alarm message;
sending, by the device, to the neighboring device an overload alarm recovery message containing the address of the device if the processing capability of the device is below the overload threshold;
canceling, by the neighboring device, the restriction or a part of restriction on the traffic passing through the device after receiving the overload alarm recovery message.

7. The method of Claim 5 or 6, further comprising:
determining, by the neighboring device, whether an overload alarm message or an overload alarm recovery message is received from the device within a predetermined period after restricting the traffic passing through the device;
if the neighboring device does not receive the overload alarm message or an overload recovery message, canceling the restriction or a part of restriction on the traffic passing through the device; if the neighboring device receives the overload alarm message, keeping on restricting the traffic passing through the device; if the neighboring device receives the overload alarm recovery message, canceling the restriction or a part of restriction on the traffic passing through the device.

8. The method of Claim 7, wherein the canceling the restriction on the traffic passing through the device comprises one of:
canceling the overload identifier of the route passing through the device; and
recovering the priority of the redundancy route of the route passing through the device to an original priority of the redundancy route, or recovering the priority of the route passing through the device to an original priority of the route.

9. The method of Claim 7, wherein the canceling the restriction on the traffic passing through the device comprises:
canceling the restriction on the traffic of the service connection passing through the device.

10. The method of Claim 1, wherein the overload threshold corresponds to at least one overload level, and the overload alarm message contains overload level information;
the restricting traffic passing through the device comprises:
restricting the traffic passing through the device according to the overload level information.

11. The method of any of Claims 1 to 6 and 10, wherein the neighboring device of the device is an upstream device of the device.

12. The method of any of Claims 1 to 6 and 10, wherein the overload threshold is determined according to the processing capability of the device.

13. The method of Claim 12, wherein the processing capability of the device comprises at least one of:
running capability of a CPU, occupation condition of a memory and processing capability of a message queue.

14. The method of Claim 1, wherein the device involved in the service connection is a control device in a bearer control layer of the communication network;
the neighboring device comprises at least one of: a control device in the bearer control layer, a connection point in the bearer layer and a call agent in a service control layer.

15. The method of Claim 1, wherein the device involved in the service connection is a connection node in a bearer layer of the communication network; the neighboring device is a control device in the bearer control layer.

16. The method of Claim 14 or 15, wherein the control device in the bearer control layer of the communication network comprises one of a bearer network resource Manager, a bearer strategy manager and a bearer resource or strategy manager.
